# EUROPEAN PATENT APPLICATION

(11) **EP 4 124 687 A1**
(43) Date of publication of application: **01.02.2023**
(21) Application number: 22187022.3
(22) Date of filing: 26.07.2022
(51) Int. Cl.: D06F 39/14, B08B 15/02, B08B 17/04, B08B 3/00, B29C 48/265, B29C 48/27, A47L 15/00

(54) **DIE WASHING MACHINE WITH SIMPLIFIED OPENING**

(30) Priority: 29.07.2021 IT 202100020234
(71) Applicant: NICCOLAI TRAFILE S.R.L., 51100 Pistoia (IT)
(72) Inventor: NICCOLAI, Tommaso, 51100 Pistoia (IT)
(74) Representative: Modiano, Micaela Nadia

(57) **Abstract**

A die washing machine (1) with simplified opening, comprising a footing (2) for supporting a machine body (3), and a cover (4) adapted to allow access to the inside of the machine body (3), for the loading/unloading of at least one die to be subjected to washing; the cover (4) is adapted to translate horizontally with respect to the resting surface of the die washing machine, in order to pass from a closed condition to an open condition, in which access to the inside of the machine body (3) is allowed.

## Description

The present invention relates to a die washing machine with simplified opening. More specifically, the invention relates to a die washing machine in which opening the cover is more convenient, less cumbersome and more functional than in conventional solutions.

As is known, a die washing machine is a machine that makes it possible to wash the dies that are used in the pasta and snack sector.

Such dies normally need to be washed after each processing cycle, in order to eliminate the residues of pasta present in them.

Conventional washing machines, used in pasta factories for cleaning dies adapted for the extrusion of pasta and of snacks, have a machine body, inside which the die is positioned vertically or horizontally, respectively with the axes of the holes horizontal and vertical, according to the type of machine used and the type of die washed.

The cleaning of the die occurs inside bins which are closed with a cover that rotates on a horizontal axis, in order to allow opening upward, and in order for an operator to be able to interact with the inside.

According to the dimensions of the machine, the opening can be either manual, with the aid of piston springs, or automatic, using a gearmotor.

However, opening the cover of a die washing machine upward has some drawbacks.

Firstly, a guillotine effect can arise in the event of a sudden malfunction of the braking system or of the signal that indicates the movement of the cover, which could therefore fall into the closed condition, injuring the operator.

Or, if the cover is opened and closed manually, the operator is forced to make considerable efforts, and also use special platforms owing to the height of the machine, in order to be able to perform the opening and closing of the cover of the die washing machine.

Furthermore, conventional die washing machines, if the cover is moved manually, have piston springs, which represent an additional cost for the die washing machine, or, if the cover is opened automatically, they have a motor which, again, is expensive.

Even further, opening the cover of the die washing machine vertically creates some problems if the rotation of the cover upward is not sufficient to create enough space for the insertion of vertical lifting systems adapted to move the dies.

In other words, it is possible that the cover does not open sufficiently to easily allow a die to be placed inside.

Even further, owing to wear over time of the drive unit used for opening/closing the cover of the die washing machine, it can happen that there is an inevitable reduction over time of the opening channel of the cover, and as a consequence frequent maintenance operations become essential.

In addition, the cover of a conventional die washing machine is difficult to clean and by virtue of its shape it is subject to what is known as the "basin effect", given that it tends to fill with water and requires an increase in effort in order to be able to close it and empty it.

The aim of the present invention is to provide a die washing machine that has simplified opening with respect to conventional machines.

Within this aim, an object of the present invention is to provide a die washing machine in which the opening of the cover occurs without increasing the space occupation of the machine either in height or in width.

Another object of the present invention is to provide a die washing machine in which the movement of the cover is facilitated with respect to conventional washing machines.

Another object of the present invention is to provide a die washing machine in which the cleaning operations can be carried out more easily.

Another object of the present invention is to provide a die washing machine that allows a simplified loading of the dies for their washing.

Another object of the present invention is to provide a die washing machine that is highly reliable, easily and practically implemented and of low cost.

This aim and these and other objects which will become better apparent hereinafter are achieved by a die washing machine with simplified opening, comprising a footing for supporting a machine body, and a cover adapted to allow access to the inside of the machine body, for the loading/unloading of at least one die to be subjected to washing, characterized in that said cover is adapted to translate horizontally with respect to the resting surface of said die washing machine, in order to pass from a closed condition to an open condition, in which access to the inside of said machine body is allowed.

Further characteristic and advantages of the invention will become better apparent from the description of preferred, but not exclusive, embodiments of the die washing machine according to the present invention, which are illustrated by way of non-limiting example in the accompanying drawings wherein:

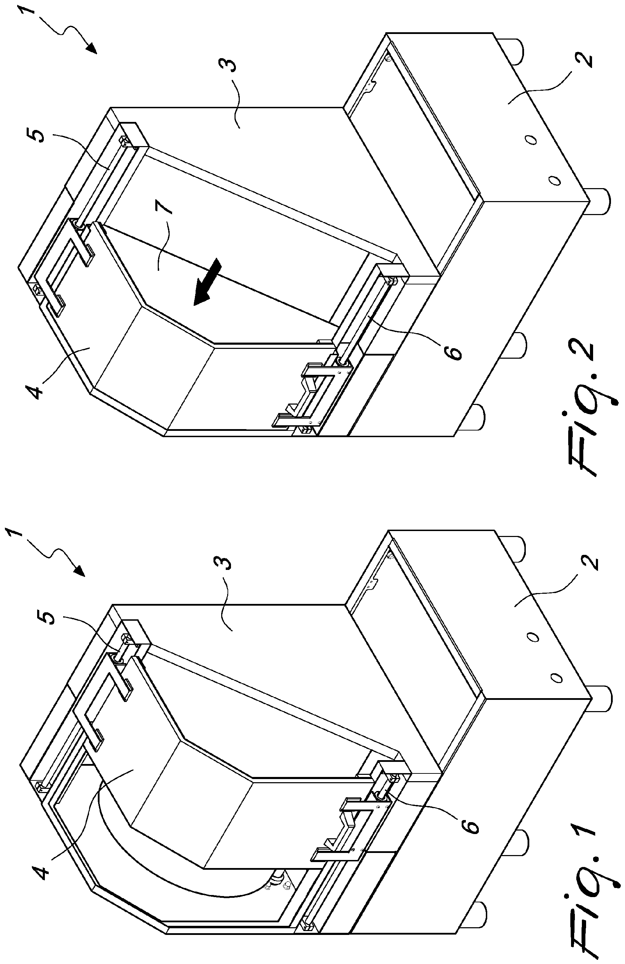

Figure 1 is a perspective view of a first embodiment of a die washing machine according to the present invention, in the open condition;
Figure 2 is a perspective view of the first embodiment of a die washing machine according to the present invention, in the closed condition;

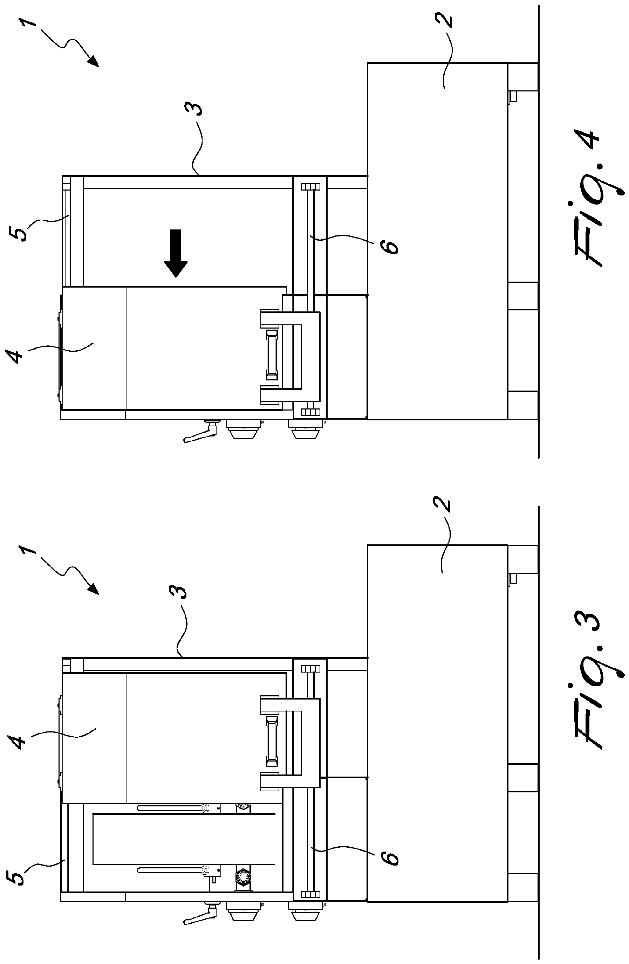

Figure 3 is a front elevation view of the die washing machine of Figures 1 and 2, in the open condition;
Figure 4 is a front elevation view of the die washing machine of Figures 1 and 2, in the closed condition;

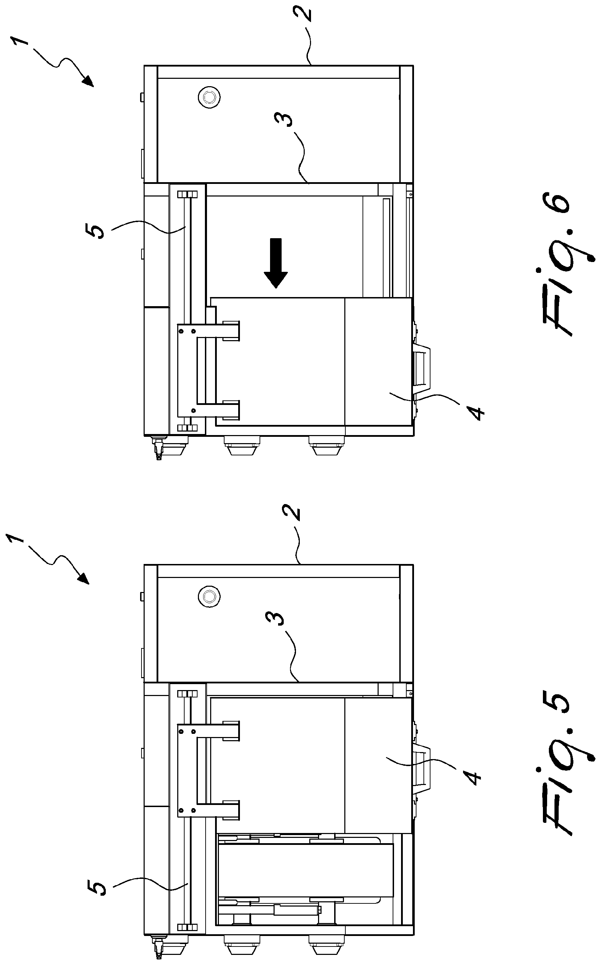

Figure 5 is a plan view from above of the die washing machine of Figures 1-4, in the open condition;
Figure 6 is a plan view from above of the die washing machine of Figures 1-4, in the closed condition;

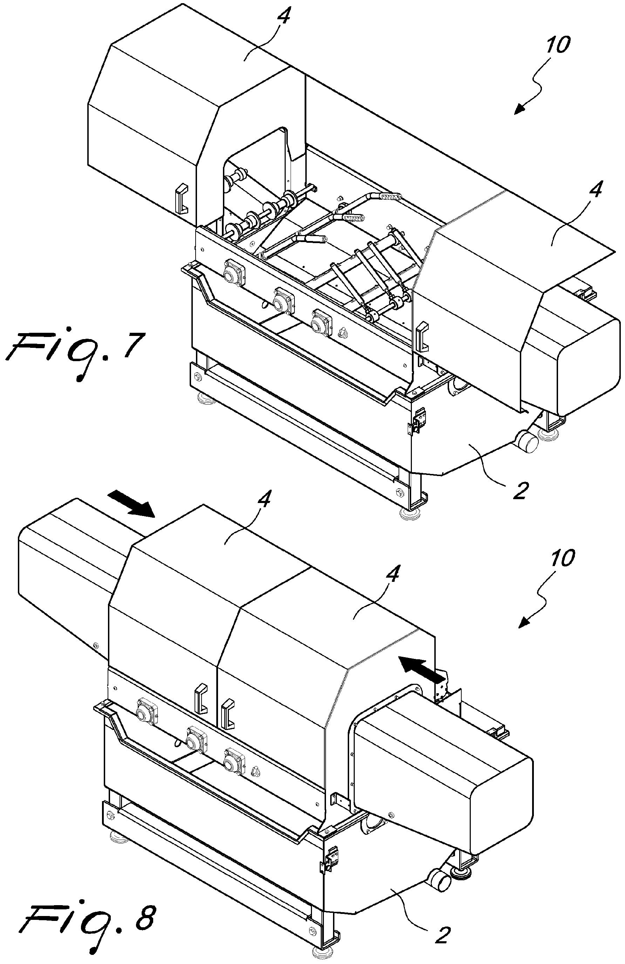

Figure 7 is a perspective view of a second embodiment of a die washing machine according to the present invention, in the open condition;
Figure 8 is a perspective view of the second embodiment of a die washing machine according to the present invention, in the closed condition;

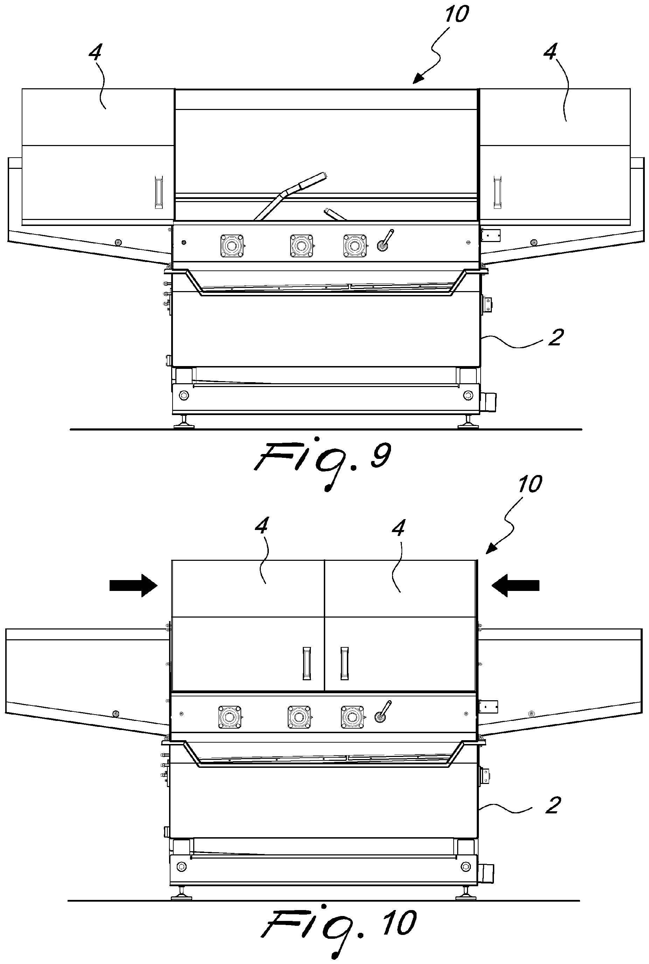

Figure 9 is a front elevation view of the die washing machine of Figures 7 and 8, in the open condition;
Figure 10 is a front elevation view of the die washing machine of Figures 7 and 8, in the closed condition;

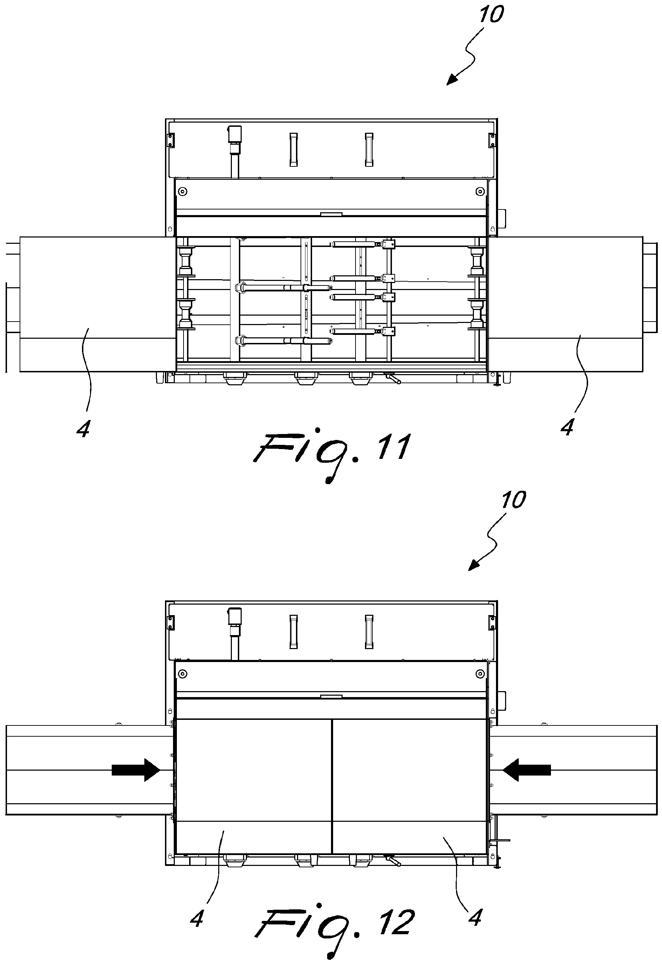

Figure 11 is a plan view from above of the die washing machine of Figures 7-10, in the open condition;
Figure 12 is a plan view from above of the die washing machine of Figures 7-19, in the closed condition.

With reference to the figures, the die washing machine, in a first embodiment thereof, generally designated by the reference numeral 1, comprises a footing body 2 which is adapted to support a machine body 3 in which one or more dies to be subjected to washing are adapted to be placed.

Conveniently, the opening/closing of the machine body 3 are delegated to a cover 4 which is made so as to be conveniently slideable horizontally so as to pass from a closed condition of the machine body 3, to an open condition.

The die washing machine according to the invention therefore has at least one cover 4 which is adapted to translate horizontally along adapted guides.

Conveniently, the cover 4 is moved along a pair of guides 5 and 6, which are respectively arranged in an upper position and in a lower position with respect to the machine body 3.

The guides 5 and 6 are arranged on different vertical planes offset one from the other. More particularly, the guide 6, that is a lower guide with respect to the machine body 3, is arranged on a front vertical plane, while the guide 5 that is an upper guide with respect to the machine body 3, is arranged on a back vertical plane. The front and back vertical planes are offset one with respect to the other.

Conveniently, the guides 5 and 6 can be linear guides, recirculatingball collars that translate on a ground shaft, concealed hinges for heavy-duty applications and the like.

In substance, the term "guide" is used to mean any mechanism/device that can enable a horizontal translation of the cover 4.

Conveniently, the cover 4 is internally supported by a tubular structure which duplicates its profile and which also makes it possible to have a better hermetic closure of the cover during the washing operation of the die washing machine.

The cover 4 can be moved both manually and in a motorized manner.

In a second embodiment, generally designated by the reference numeral 10, the die washing machine according to the invention has a pair of covers 4 arranged mutually side-by-side which are adapted to translate laterally, horizontally, i.e. horizontally with respect to the resting surface of the die washing machine, so as to allow for the possibility of the opening of the die washing machine having larger dimensions than those of the first embodiment.

The movement of the covers 4 is exactly analogous to what is described for the first embodiment of the invention.

In both embodiments, the hermetic seal of the coupling between the machine body 3 and the cover 4 is ensured by a series of labyrinths obtained between the fixed sides of the die washing machine and the edges of the cover, on the entire perimeter with adapted inclinations. Furthermore, the tubular structure described above ensures that a further obstacle is created to the leakage of water from the washing machine.

The cover 4 is provided by a front portion which is moved in translation, while the sides 7 of the cover 4 are constituted by fixed shoulders of the machine body 3, so as to cooperate with the front portion so as to define a complete cover 4.

It should be noted that the cover 4 when moved to the open position does not protrude from the space occupation of the machine body 3, being thus contained inside such space occupation.

In practice it has been found that the die washing machine according to the present invention fully achieves the set aim and objects, in that it makes it possible to be opened/closed via the translation of a cover, horizontally with respect to the resting surface of the die washing machine, thus overcoming the above mentioned drawbacks.

The die washing machine thus conceived is susceptible of numerous modifications and variations, all of which are within the scope of the appended claims.

Moreover, all the details may be substituted by other, technically equivalent elements.

In practice, the materials used, as well as the contingent shapes and dimensions, may be any according to the requirements and to the state of the art.

The disclosures in Italian Patent Application No. 102021000020234 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A die washing machine (1; 10) with simplified opening, comprising a footing (2) for supporting a machine body (3), and a cover (4) adapted to allow access to the inside of the machine body (3), for the loading/unloading of at least one die to be subjected to washing, **characterized in that** said cover (4) is adapted to translate horizontally with respect to the resting surface of said die washing machine, in order to pass from a closed condition to an open condition, in which access to the inside of said machine body (3) is allowed.

2. The die washing machine according to claim 1, **characterized in that** said cover (4), in the open condition, is contained inside the space occupation of said machine body (3).

3. The die washing machine according to claim 1 or 2, **characterized in that** said cover (4) comprises two half-covers (4) which are adapted to translate horizontally away from each other in order to allow access to the inside of said machine body (3).

4. The die washing machine according to one or more of the preceding claims, **characterized in that** said cover (4) is adapted to be moved along guides (5, 6) which are arranged above and below said cover (4) and are defined on said machine body (3).

5. The die washing machine according to claim 4, **characterized in that** said guides (5, 6) are arranged on different vertical planes offset one from the other.

6. The die washing machine according to claim 5, **characterized in that** said guides (5, 6) comprise a guide (6), that is a lower guide with respect to the machine body (3), that is arranged on a front vertical plane, and a guide (5), that is an upper guide with respect to the machine body (3), that is arranged on a back vertical plane, the front and back vertical planes being offset one with respect to the other.

7. The die washing machine according to one or more of the preceding claims, **characterized in that** said cover (4) is supported by a tubular structure which duplicates its profile.

8. The die washing machine according to one or more of the preceding claims, **characterized in that** said cover (4) comprises a front portion which is adapted to be moved, the sides (7) of said cover (4) defining fixed shoulders of the machine body.
